# EUROPEAN PATENT APPLICATION

(11) **EP 4 488 154 A1**
(43) Date of publication of application: **08.01.2025**
(21) Application number: 24183495.1
(22) Date of filing: 20.06.2024
(51) Int. Cl.: B62J 17/10, B62J 50/00, B62J 29/00

(54) **VEHICLE FRONT STRUCTURE**

(30) Priority: 23.06.2023 JP 2023103327
(71) Applicant: Suzuki Motor Corporation, Shizuoka 432-8611 (JP)
(72) Inventor: ISHII, Tatsuki, Shizuoka (JP)
(74) Representative: Haseltine Lake Kempner LLP

(57) **Abstract**

A vehicle front structure for a straddle-type vehicle (1) is provided. The straddle-type vehicle (1) includes a headlight (20) installed in a vehicle (1) front. The vehicle (1) front structure includes: a front cowl (30) configured to cover a periphery of the headlight (20); and a terminal device (80) installed inside the front cowl (30). The terminal device (80) includes a connection terminal (81) configured to allow insertion or removal of a terminal of an external device, and a controller (82) configured to control communication with the external device. The connection terminal (81) and the controller (82) are mounted inside the front cowl (30) so as to be spaced apart from each other.

## Description

### TECHNICAL FIELD

The present disclosure relates to a vehicle front structure.

### BACKGROUND ART

As an example of a straddle-type vehicle, Patent Literature 1 discloses a straddle-type vehicle in which a terminal device for connecting an external device is provided on the periphery of a handle. In Patent Literature 1, a unit case of the terminal device is formed to be vertically long, and a connection terminal is provided at one end of the unit case. A controller that controls transmission and reception of signals is stored in the unit case. The connection terminal of the terminal device is exposed from a body cover of the straddle-type vehicle, and a cable extending from the external device is connected to the connection terminal of the terminal device, so that a signal is transmitted and received between the external device and the control unit of the straddle-type vehicle.

Patent Literature 1: JP2022-156394A

### SUMMARY OF INVENTION

However, in order to install the terminal device on an inner side of a front cowl, a large space is required in a depth direction of the front cowl, and the design of the vehicle is impaired.

The present disclosure has been made in view of the above, and an object of the present disclosure is to provide a vehicle front structure in which a terminal device can be installed in a narrow space and design of a vehicle can be improved.

On aspect of the present disclosure provides a vehicle front structure for a straddle-type vehicle, the straddle-type vehicle including a headlight installed in a vehicle front, the vehicle front structure including: a front cowl configured to cover a periphery of the headlight; and a terminal device installed inside the front cowl, in which: the terminal device includes a connection terminal configured to allow insertion or removal of a terminal of an external device, and a controller configured to control communication with the external device; and the connection terminal and the controller are mounted inside the front cowl so as to be spaced apart from each other.

According to the vehicle front structure of one aspect of the present disclosure, the connection terminal and the controller of the terminal device are separated, and it is not necessary to install the connection terminal and the controller at the same location. By separately installing the connection terminal and the controller, the connection terminal can be installed even in a narrow space, and a degree of freedom in layout of the connection terminal and the controller in the front cowl is improved. This reduces restrictions on the design of the front cowl, and improves the design of the vehicle.

### BRIEF DESCRIPTION OF DRAWINGS

The present disclosure will be described in detail based on the following without being limited thereto, wherein:
FIG. 1 is a front view of a straddle-type vehicle according to the present embodiment;
FIG. 2 is a left side view of the straddle-type vehicle according to the present embodiment;
FIG. 3 is a perspective view of a periphery portion of a cowl brace according to the present embodiment;
FIG. 4 is a side view of the periphery portion of the cowl brace according to the present embodiment;
FIG. 5 is a rear view of a vehicle front structure according to the present embodiment;
FIG. 6 is a cross-sectional view of FIG. 5 taken along a line A-A;
FIG. 7 is a perspective view of the vehicle front structure according to the present embodiment; and
FIG. 8 is a top view of the periphery of a USB terminal device according to the present embodiment.

### DESCRIPTION OF EMBODIMENTS

A headlight is installed in a vehicle front of a straddle-type vehicle according to an aspect of the present disclosure. In the vehicle front structure of the straddle-type vehicle, a periphery of a headlight is covered with a front cowl, and a terminal device is installed inside the front cowl. The terminal device includes a connection terminal into and from which a terminal of an external device is inserted and removed, and a controller that controls communication with the external device. The connection terminal and the controller are mounted spaced apart from each other inside the front cowl. Since the connection terminal and the controller of the terminal device are separated, it is not necessary to install the connection terminal and the controller at the same location. By separately installing the connection terminal and the controller, the connection terminal can be installed even in a narrow space, and a degree of freedom in layout of the connection terminal and the controller in the front cowl is improved. This reduces restrictions on the design of the front cowl, and improves the design of the vehicle.

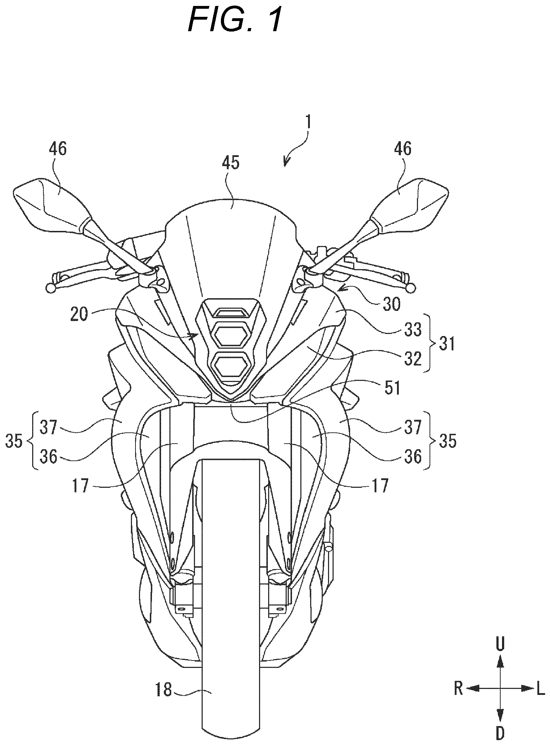

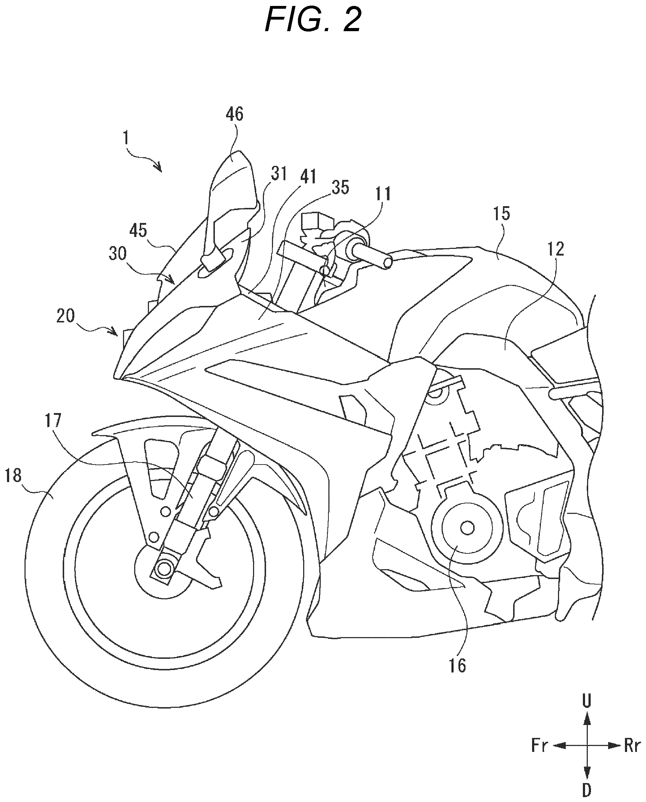

A straddle-type vehicle according to the present embodiment will be described below with reference to the accompanying drawings. FIG. 1 is a front view of a straddle-type vehicle according to the present embodiment. FIG. 2 is a left side view of the straddle-type vehicle according to the present embodiment. In the following drawings, an arrow FR indicates a vehicle front side, an arrow RE indicates a vehicle rear side, an arrow L indicates a vehicle left side, and an arrow R indicates a vehicle right side.

As shown in FIGS. 1 and 2, a headlight 20 is installed in a vehicle front of a straddle-type vehicle 1 at two upper and lower stages. The periphery of the headlight 20 is covered from a front side by a front cowl 30. A head pipe 11 at a front end of a vehicle body frame is located in a rear side of the headlight 20. A pair of main frames 12 extend to the rear side from the head pipe 11. A fuel tank 15 is installed above the pair of main frames 12, and an engine 16 is supported below the pair of main frames 12. A front fork 17 is supported on the head pipe 11 to be steerable, and a front wheel 18 is rotatably supported on a lower portion of the front fork 17.

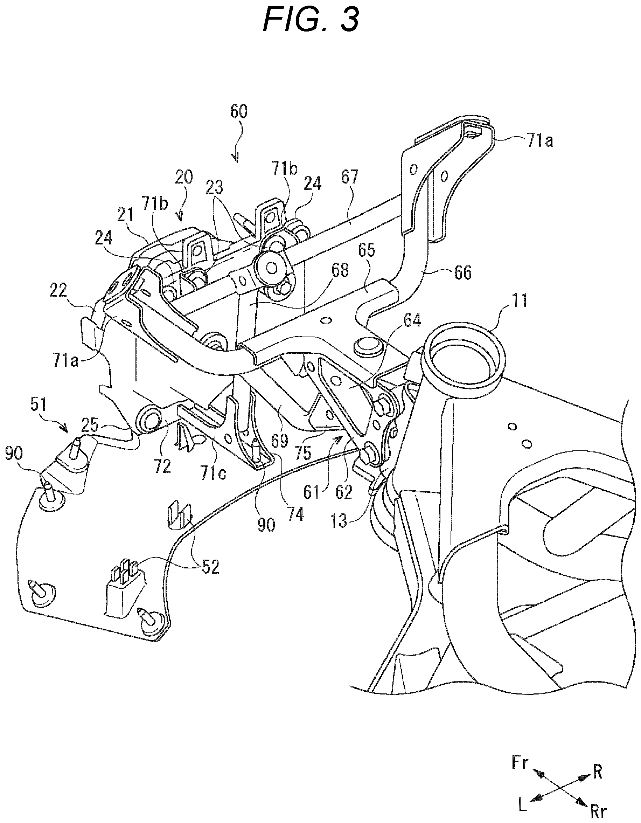

A cowl brace 60 (see FIG. 3) is supported on a front surface of the head pipe 11, and an inner side of the front cowl 30 is supported by the cowl brace 60 from the vehicle rear side. The front cowl 30 includes a body cowl 31 and a pair of side cowls 35. The body cowl 31 forms a front surface of the vehicle front, and the pair of side cowls 35 form both side surfaces of the vehicle front. The body cowl 31 has a double structure in which an upper body cowl 33 is placed on a lower body cowl 32, and the pair of side cowls 35 have a double structure in which a pair of outer side cowls 37 are placed on a pair of inner side cowls 36.

A windscreen 45 for wind protection is provided at the center of an upper portion of the body cowl 31, and a pair of mirrors 46 are provided at two positions on the left and right of the body cowl 31 with the windscreen 45 in between. A front surface of the front cowl 30 is formed by the body cowl 31, and the both side surfaces of the front cowl 30 are formed by the pair of side cowls 35. The headlight 20 is covered by the body cowl 31 from the front side, and the headlight 20 is covered by the pair of side cowls 35 from lateral sides. The headlight 20 is covered by a meter panel 41 from an upper side, and the headlight 20 is covered by a lower cover 51 from a lower side.

A universal serial bus (USB) terminal device that enables connection with a mobile device such as a smartphone is installed in the vehicle front of the straddle-type vehicle 1. In general, the USB terminal device is formed in a vertically long shape in which a USB terminal and a USB controller are integrated. Therefore, in order to install the USB terminal device on the meter panel, a large space is required in a depth direction from an installation surface of the meter panel, and restriction on the design of the front cowl or the like is large. Therefore, in the present embodiment, the USB terminal and the USB controller are separately provided, so that the USB terminal can be mounted even in a narrow space, thereby reducing the restriction on the design of the front cowl or the like.

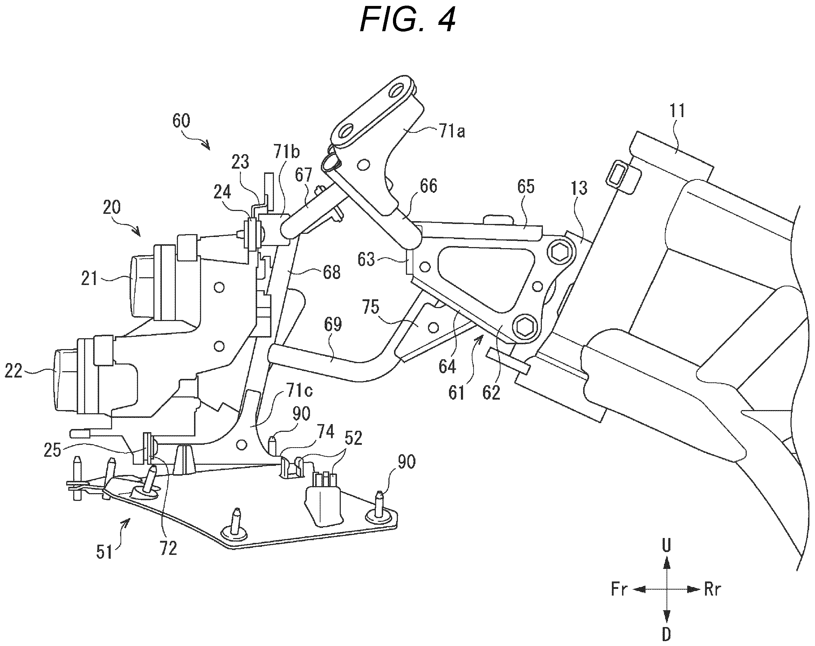

A periphery portion of the cowl brace of the present embodiment will be described with reference to FIGS. 3 and 4. FIG. 3 is a perspective view of the periphery portion of the cowl brace according to the present embodiment. FIG. 4 is a side view of the periphery portion of the cowl brace according to the present embodiment. In FIGS. 3 and 4, the front cowl and the meter panel are omitted for convenience of description.

As shown in FIGS. 3 and 4, the cowl brace 60 is made of a metal pipe, a metal bracket, and the like, and forms a framework of the vehicle front in front of the head pipe 11. The head pipe 11 supports the front cowl 30 (see FIG. 1), the headlight 20, and the lower cover 51 via the cowl brace 60. The headlight 20 is formed into two stages, upper and lower, including an upper headlight 21 and a lower headlight 22. A pair of upper mounting portions 23 are formed on an upper portion of the upper headlight 21, and a pair of cowl mounting portions 24 are formed adjacent to the pair of upper mounting portions 23. A pair of lower mounting portions 25 are formed on a lower portion of the lower headlight 22.

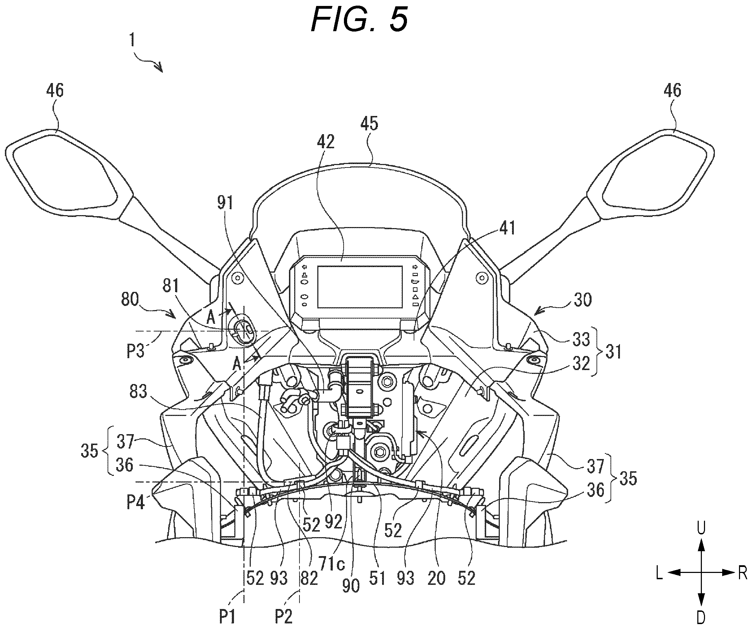

The headlight 20 is covered with a lower cover 51 from below. A plurality of insertion holes for clips 90 are formed in the lower cover 51 along a front edge and both side edges. An insertion hole for a clip 90 is also formed at the rear side of the center of the lower cover 51. The insertion holes at the front edge and both side edges of the lower cover 51 serve as mounting portions for the front cowl 30, and the insertion hole at the rear part of the lower cover 51 serves as a mounting portion for the cowl brace 60. A plurality of clamps 52 for winker harnesses 93 (see FIG. 5) are formed on an upper surface of the lower cover 51. As will be described in detail later, an installation surface for electric components is secured on the upper surface of the lower cover 51.

A protruding portion 13 protrudes from the front surface of the head pipe 11, and a frame 61 on the rear side of the cowl brace 60 is fixed to the protruding portion 13 of the head pipe 11. The frame 61 includes a pair of frame plates 62 facing each other across the protruding portion 13 of the head pipe 11, a front plate 63 connecting front edges of the pair of frame plates 62, and a lower plate 64 connecting lower edges of the pair of frame plates 62. A T-shaped bracket 65 is fixed to upper edges of the pair of frame plates 62, and upper surfaces of the pair of frame plates 62 are covered by a vertically long portion of the T-shaped bracket 65. A tip end side of the T-shaped bracket 65 is horizontally long, and a U-shaped upper arm 66 is fixed to front portions of the pair of frame plates 62 via a horizontally long portion of the T-shaped bracket 65.

The upper arm 66 extends from a lateral plate of the T-shaped bracket 65, and extending portions of the upper arm 66 are curved so as to spread forward in a left-right direction. A pair of mounting brackets (mounting portions) 71a are fixed to both ends of the upper arm 66, and the mirrors 46 (see FIG. 1) are screwed to the pair of mounting brackets 71a via the front cowl 30. The vicinity of the pair of mounting brackets 71a of the upper arm 66 is connected via an inverted U-shaped curved bridge 67. A pair of mounting brackets 71b are fixed to a front surface of the curved bridge 67 at a predetermined interval, and the upper mounting portions 23 of the headlight 20 are screwed to the pair of mounting brackets 71b.

A down arm 68 extends downward from the middle of the curved bridge 67, and a mounting bracket 71c is fixed to a lower portion of the down arm 68. The mounting bracket 71c extends in a front-rear direction along the lower cover 51, a horizontally long mounting plate 72 is provided at a front end of the mounting bracket 71c, and a cover mounting portion 74 is formed on the rear side of the mounting bracket 71c. The lower mounting portion 25 of the headlight 20 and the front cowl 30 are screwed to the mounting plate 72 on the front side of the mounting bracket 71c. An insertion hole is formed in the cover mounting portion 74 on the rear side of the mounting bracket 71c. The rear part of the lower cover 51 is mounted to the cover mounting portion 74 by the clip 90.

A lower arm 69 extends forward from the lower plate 64 of the frame 61, and a tip end of the lower arm 69 is fixed to the down arm 68. A reinforcing bracket 75 having a substantially biangular shape is fixed to the lower plate 64 of the frame 61, and a base end part of the lower arm 69 is supported by the reinforcing bracket 75. In this way, the front cowl 30, the headlight 20, and the lower cover 51 are stably supported by the cowl brace 60 having high rigidity. Since the headlight 20 and the lower cover 51 are mounted to the common mounting bracket 71c, the number of components can be reduced, and the mounting positions can be made compact to save space.

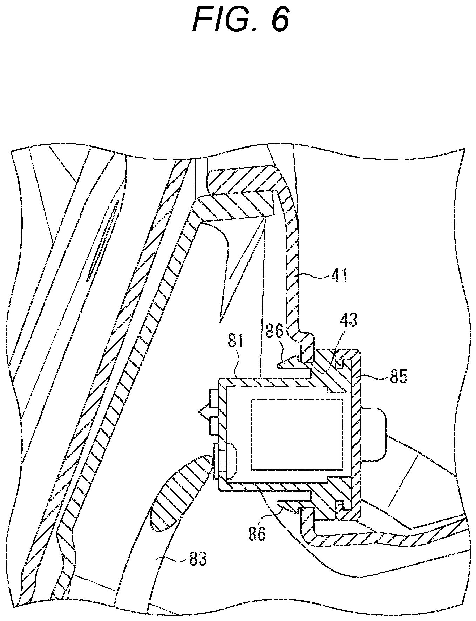

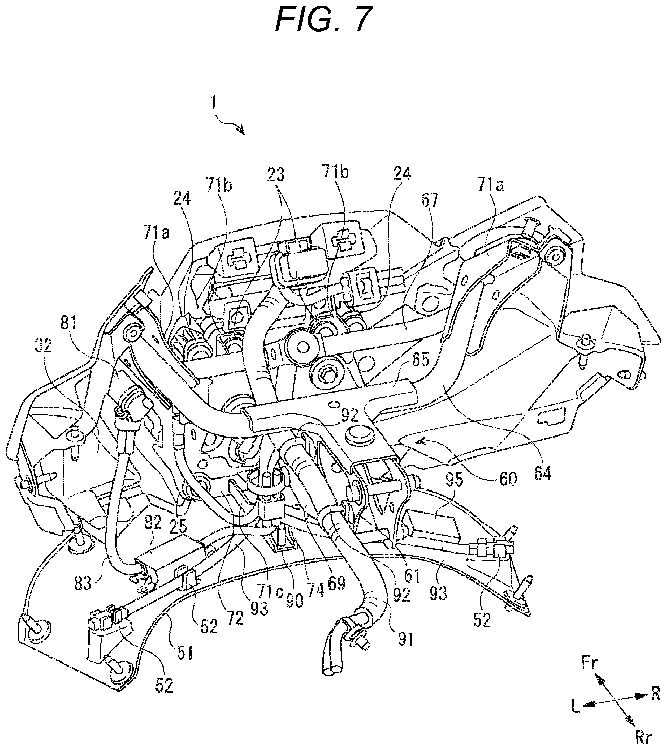

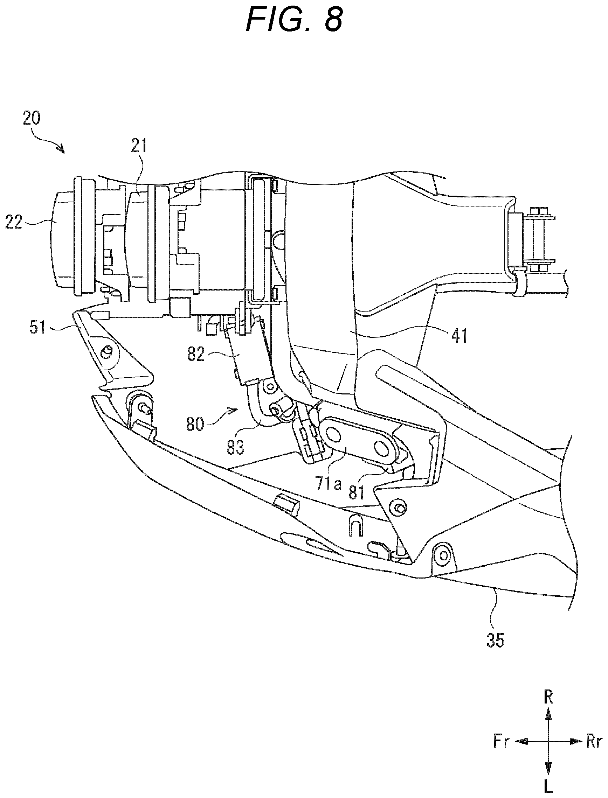

The vehicle front structure according to the present embodiment will be described with reference to FIGS. 5 to 8. FIG. 5 is a rear view of the vehicle front structure according to the present embodiment. FIG. 6 is a cross-sectional view of FIG. 5 taken along a line A-A. FIG. 7 is a perspective view of the vehicle front structure according to the present embodiment. FIG. 8 is a top view of the periphery of a USB terminal device according to the present embodiment. The side cowl, the meter panel, and the mirrors are omitted in FIG. 8, and the body cowl is omitted in FIG. 8.

As shown in FIG. 5, the front surface of the front cowl 30 is covered by the body cowl 31 of the front cowl 30, and both side surfaces of the front cowl 30 are covered by the pair of side cowls 35 of the front cowl 30. The body cowl 31 includes the upper body cowl 33 and the lower body cowl 32. The lower body cowl 32 is located on the inner side the upper body cowl 33. The pair of side cowls 35 includes the pair of outer side cowls 37 and the pair of inner side cowls 36. The pair of inner side cowls 36 are located on the inner side of the pair of outer side cowls 37. The lower surface of the front cowl 30 is covered by the lower cover 51.

An upper surface of the front cowl 30 is covered with the meter panel 41. A meter 42 on which various kinds of information are displayed is installed at the center of an upper surface of the meter panel 41. A USB terminal device (terminal device) 80 is installed on the inner side of the front cowl 30. A USB port (connection terminal) 81 and a USB controller (controller) 82 of the USB terminal device 80 are provided separately. The USB port 81 is mounted to the meter panel 41, and the USB controller 82 is mounted to the lower cover 51. A terminal of an external device such as a mobile terminal is inserted into the USB port 81, and communication with the external device is controlled by the USB controller 82.

The USB port 81 and the USB controller 82 are mounted vertically apart from each other on the inner side of the front cowl 30. More specifically, a left-right position P1 of the USB port 81 and a left-right position P2 of the USB controller 82 are adjacent to each other, and an upper-lower position P3 of the USB port 81 and an upper-lower position P4 of the USB controller 82 are separated from each other such that the USB controller 82 is located below the USB port 81. The left-right position P1 of the USB port 81 and the left-right position P2 of the USB controller 82 are brought close to each other, a lead wire 83 connecting the USB port 81 and the USB controller 82 is shortened, and the USB port 81 and the USB controller 82 are compactly installed on the inner side of the front cowl 30.

As shown in FIG. 6, the USB port 81 is mounted to a mounting hole 43 of the meter panel 41. The USB port 81 is formed into an oval tube shape. One end of the USB port 81 is exposed from a front side of the meter panel 41, and the other end of the USB port 81 is inserted into a back side of the meter panel 41. An insertion opening is formed at one end of the USB port 81. A rubber cap 85 is mounted to the insertion opening of the USB port 81. The cap 85 protects a wiring structure in the USB port 81 from water droplets and dust. The lead wire 83 extends from the other end of the USB port 81 toward the USB controller 82.

A plurality of fitting claws 86 are provided on a peripheral wall of the USB port 81. When the USB port 81 is inserted into the mounting hole 43 from the front side of the meter panel 41, the USB port 81 is hooked to an opening edge of the mounting hole 43 by an elastic force of the fitting claws 86. The USB port 81 is mounted to the meter panel 41 by a snap-fit method, so that the workload of mounting the USB port 81 to the meter panel 41 is reduced. Further, since the USB port 81 is mounted from the front side of the meter panel 41, a tool for tools on the back side of the meter panel 41 is no longer required, and a degree of freedom in design of the vehicle is improved.

As shown in FIGS. 5 and 7, the front side and both left and right parts of the lower cover 51 are mounted to the lower edge of the front cowl 30 by the plurality of clips 90. The rear part of the lower cover 51 is mounted to a lower portion of the cowl brace 60. The mounting position in the rear part of the lower cover 51 with respect to the lower portion of the cowl brace 60 is located at the center in the left-right direction. Specifically, the rear part of the lower cover 51 is mounted to the mounting bracket 71c (see FIG. 3) of the cowl brace 60 having high rigidity by the clip 90. In this way, both front and rear parts and both left and right parts of the lower cover 51 are mounted to the front cowl 30 and the cowl brace 60, and the lower cover 51 is supported in a balanced manner.

In this case, a load acts not only on the front part and both left and right parts of the lower cover 51 but also on the rear part of the lower cover 51, so that the load acting on the lower cover 51 is dispersed, thereby preventing deformation of the lower cover 51. Further, since the lower cover 51 is supported at both front and rear parts and both left and right parts, deformation of the lower cover 51 is restrained at both front and rear parts and both left and right parts. Although the lower cover 51 is mounted to the cowl brace 60 at one position in the rear part of the lower cover 51, deformation of the rear part of the lower cover 51 is effectively prevented by the cowl brace 60 having high rigidity. The rigidity of the lower cover 51 is improved by supporting the lower cover 51 at all the front, rear, right and left parts thereof.

An upper portion of the upper body cowl 33 and the mirrors 46 (see FIG. 1) are fastened to the pair of mounting brackets 71a of the cowl brace 60 with bolts. The pair of upper mounting portions 23 of the headlight 20 are fastened to the pair of mounting brackets 71b of the cowl brace 60 by bolts. The USB port 81 is installed in the lower body cowl 32 below the left mounting bracket 71a. A space below the mounting bracket 71a is effectively used as an installation space for the USB port 81. A vertically intermediate portion of the lower body cowl 32 is fastened to the pair of cowl mounting portions 24 of the headlight 20 by bolts.

The mounting plate 72 is provided on the front side of the mounting bracket 71c of the cowl brace 60, and the pair of lower mounting portions 25 of the headlight 20 and a lower portion of the lower body cowl 32 are fastened to the mounting plate 72 by bolts. The cover mounting portion 74 is formed on the rear side of the mounting bracket 71c, and the rear part of the lower cover 51 is pinned to the cover mounting portion 74 by the clip 90. A main harness 91 is installed on the frame 61 and the lower arm 69 of the cowl brace 60 via a plurality of ringshaped clamps 92. A plurality of cables such as a pair of winker harnesses 93 and lead wires 83 are branched from the main harness 91.

The pair of winker harnesses 93 extend along a rear edge of the lower cover 51. A plurality of clamps 52 are provided in the rear part of the upper surface of the lower cover 51, and the pair of winker harnesses 93 are held by the plurality of clamps 52. Since the rigidity of the lower cover 51 is improved, the pair of winker harnesses 93 can be held by the lower cover 51, and the ease of assembling the pair of winker harnesses 93 is improved. The lead wire 83 extends to the USB port 81, and the USB controller 82 is provided in the middle of the lead wire 83. The USB controller 82 is positioned below the USB port 81, and a length of the lead wire 83 is reduced as much as possible.

On the upper surface of the lower cover 51, the installation surface for electric components such as the USB controller 82 and an electronic toll collection (ETC) antenna 95 is secured on both sides of the mounting bracket 71c. Since the rigidity of the lower cover 51 is improved, the USB controller 82 and the ETC antenna 95 can be installed on the lower cover 51, and the ease of assembling the USB controller 82 and the ETC antenna 95 is improved. Thus, even if various cables and electric components are installed on the lower cover 51, deformation of the lower cover 51 is prevented. The electric components are installed on the lower cover 51 by an existing installation method such as screwing or bonding.

As shown in FIG. 8, at least a part of the USB port 81 overlaps the mounting bracket (mounting portion) 71a for the mirror 46 in a top view. As described above, the USB port 81 and the USB controller 82 of the USB terminal device 80 are separately formed, so that the USB port 81 is downsized, and most of the USB port 81 is positioned directly below the mounting bracket 71a. Therefore, the USB port 81 can be mounted to an empty space below the mounting bracket 71a, and it is not necessary to increase the size of the front cowl 30 and the meter panel 41 in order to install the USB terminal device 80.

As described above, according to the vehicle front structure of the present embodiment, the USB port 81 and the USB controller 82 of the USB terminal device 80 are separated, and it is not necessary to install the USB port 81 and the USB controller 82 in the same place. By separately installing the USB port 81 and the USB controller 82, the connection terminal can be mounted even in a narrow space, and a degree of freedom in layout of the USB port 81 and the USB controller 82 in the front cowl 30 is improved. This reduces restrictions on the design of the front cowl 30, the meter panel 41, and the like, and improves the design of the vehicle.

In the present embodiment, the USB terminal device is exemplified as the terminal device, but the present disclosure is also applicable to a terminal device other than the USB terminal device.

Further, in the present embodiment, the USB port and the USB controller are separated vertically, but the USB port and the USB controller may be separated horizontally.

In the present embodiment, the lower cover is supported by the front cowl and the cowl brace at both front and rear parts and both left and right parts of the lower cover. However, it is sufficient that the lower cover is supported by at least the front cowl and cowl brace on both front and rear parts of the lower cover.

Further, in the present embodiment, the body cowl and the pair of side cowls of the front cowl are separately formed. Alternatively, the body cowl and the pair of side cowls may be integrally formed.

Further, in the present embodiment, the body cowl has a double structure including the upper body cowl and the lower body cowl. Alternatively, the body cowl may be formed by a single cowl. Similarly, the side cowl has a double structure including the outer side cowl and the inner side cowl. Alternatively, the side cowl may be formed by a single cowl.

Further, in the present embodiment, the cowl brace is formed of a metal pipe, a metal bracket, or the like, but the structure of the cowl brace is not particularly limited as long as the cowl brace can support the inner side of the front cowl from the vehicle rear side.

Further, in the present embodiment, the headlight is formed in two upper and lower stages by the upper headlight and the lower headlight. Alternatively, the headlight may be formed by a single light.

Further, the vehicle front structure according to the present embodiment is not limited to the above-described straddle-type vehicle, and may be used in other types of straddle-type vehicles. The straddle-type vehicle is not limited to a general vehicle in which a driver rides on a seat in a posture of straddling the seat, and includes a scooter-type vehicle in which the driver rides on the seat without straddling the seat.

As described above, in a first aspect, there is provided a vehicle front structure for a straddle-type vehicle (1), the straddle-type vehicle including a headlight (20) installed in a vehicle front, the vehicle front structure including: a front cowl (30) configured to cover a periphery of the headlight; and a terminal device (USB terminal device 80) installed inside the front cowl, in which the terminal device includes a connection terminal (USB port 81) configured to allow insertion or removal of a terminal of an external device, and a controller (USB controller 82) configured to control communication with the external device, and the connection terminal and the controller are mounted inside the front cowl so as to be spaced apart from each other. According to this configuration, the connection terminal and the controller of the terminal device are separated, and it is not necessary to install the connection terminal and the controller at the same location. By separately installing the connection terminal and the controller, the connection terminal can be mounted even in a narrow space, and a degree of freedom in layout of the connection terminal and the controller in the front cowl is improved. This reduces restrictions on the design of the front cowl, and improves the design of the vehicle.

In a second aspect, there is provided the vehicle front structure according to the first aspect, in which the connection terminal and the controller are adjacent to each other in a lateral direction, and the connection terminal and the controller are separated from each other in a vertical direction such that the controller is located below the connection terminal. According to this configuration, the left-right positions of the connection terminal and the controller are brought close to each other, the lead wire is shortened, and the connection terminal and the controller can be compactly installed inside the front cowl.

In a third aspect, there is provided the vehicle front structure according to the first aspect or the second aspect, and further includes: a meter panel (41) covering the headlight from above; and a lower cover (51) covering the headlight from below, in which the connection terminal is mounted to the meter panel, and the controller is mounted to the lower cover. According to this configuration, the connection terminal and the controller are installed close to each other in a left-right direction, so that the lead wire can be shortened and the connection terminal and the controller can be installed compactly.

In a fourth aspect, there is provided the vehicle front structure according to the third aspect, in which the connection terminal is configured to be mounted to the meter panel from a front side of the meter panel by snap-fitting. According to this configuration, the workload of mounting the connection terminal to the meter panel is reduced. Further, since the connection terminal is mounted from the front side of the meter panel, a tool for tools on the back side of the meter panel is no longer required, and a degree of freedom in design of the vehicle is improved.

In a fifth aspect, there is provided the vehicle front structure according to the third aspect or the fourth aspect, and further includes: a cowl brace (60) configured to support the front cowl from inside of the cowl brace, in which the lower cover is mounted to the cowl brace, and the controller is installed to the lower cover on a lateral side of a mounting position (mounting bracket 71c) of the cowl brace for the lower cover. According to this configuration, the lower cover is supported by the cowl brace having high rigidity, so that deformation of the lower cover can be prevented even when the controller is installed on the lower cover.

In a sixth aspect, there is provided the vehicle front structure according to the fifth aspect, in which the cowl brace is provided with a mounting portion (mounting bracket 71a) for a mirror (46), and at least a part of the connection terminal overlaps the mounting portion in a top view. According to this configuration, the connection terminal can be mounted to the empty space below the mounting portion, and it is not necessary to increase the size of the front cowl and the meter panel in order to install the terminal device.

Although the present embodiment is described, a part or all of the embodiment and modifications above described may be combined as another embodiment.

The technique according to the present disclosure is not limited to the above-described embodiment, and may be variously changed, replaced, or modified without departing from the gist of the technical concept. Further, the present disclosure may be implemented by other methods as long as the technical concept can be implemented by the methods through advance of the technique or other derivative techniques. Therefore, the claims cover all embodiments that may fall within the scope of the technical concept.

## Claims

1. A vehicle front structure for a straddle-type vehicle (1), the straddle-type vehicle (1) comprising a headlight (20) installed in a vehicle front, the vehicle front structure comprising:
a front cowl (30) configured to cover a periphery of the headlight (20); and
a terminal device (80) installed inside the front cowl (30),
wherein the terminal device (80) includes a connection terminal (81) configured to allow insertion or removal of a terminal of an external device, and a controller (82) configured to control communication with the external device, and
wherein the connection terminal (81) and the controller (82) are mounted inside the front cowl (30) so as to be spaced apart from each other.

2. The vehicle front structure according to claim 1,
wherein the connection terminal (81) and the controller (82) are adj acent to each other in a lateral direction, and the connection terminal (81) and the controller (82) are separated from each other in a vertical direction such that the controller (82) is located below the connection terminal (81).

3. The vehicle front structure according to claim 1 or 2, further comprising:
a meter panel (41) covering the headlight (20) from above; and
a lower cover (51) covering the headlight (20) from below,
wherein the connection terminal (81) is mounted to the meter panel (41), and the controller (82) is mounted to the lower cover (51).

4. The vehicle front structure according to claim 3,
wherein the connection terminal (81) is configured to be mounted to the meter panel (41) from a front side of the meter panel (41) by snap-fitting.

5. The vehicle front structure according to claim 3 or 4, further comprising:
a cowl brace (60) configured to support the front cowl (30) from an inside of the front cowl (30),
wherein the lower cover (51) is mounted to the cowl brace (60), and
wherein the controller (82) is installed to the lower cover (51) on a lateral side of a mounting position of the cowl brace (60) for the lower cover (51).

6. The vehicle front structure according to claim 5,
wherein the cowl brace (60) is provided with a mounting portion (71a) for a mirror (46), and
wherein at least a part of the connection terminal (81) overlaps the mounting portion (71a) in a top view.
